Europäisches Patentamt

(19) European Patent Office

Office européen des brevets

(11) Publication number: **0 014 228**
**B1**

# EUROPEAN PATENT SPECIFICATION

(45) Date of publication of patent specification: **25.05.83**

(51) Int. Cl.³: **C 10 L 7/02**

(21) Application number: **79103764.1**

(22) Date of filing: **03.10.79**

(54) Solid fuel and a process for producing solid fuel.

(30) Priority: **08.02.79 JP 12762/79**

(43) Date of publication of application:
**20.08.80 Bulletin 80/17**

(45) Publication of the grant of the patent:
**25.05.83 Bulletin 83/21**

(84) Designated Contracting States:
**DE FR GB IT**

(56) References cited:
**DE - B - 1 181 167**
**GB - A - 1 525 377**
**US - A - 2 581 441**
**US - A - 3 314 884**
**US - A - 3 824 085**
**US - A - 4 153 421**

The file contains technical information
submitted after the application was filed and not
included in this specification

(73) Proprietor: **KYOSHIN CO., LTD.**
**Shinpou Bldg., 3-10-2**
**Honkomagome, Bunkyo-ku, Tokyo (JP)**
(73) Proprietor: **Taiyo Chemical Corp.**
**1-1 Uchisaiwaicho 2-chome**
**Chiyoda-ku, Tokyo (JP)**

(72) Inventor: **Shibanai, Ichiro**
**No. 312 Akasaka Cooperous**
**6-10-6, Akasaka Minato-ku, Tokyo (JP)**
Inventor: **Horikoshi, Kouki**
**8-39-4, Sakuradai**
**Nerima-ku, Tokyo (JP)**
Inventor: **Nakamura, Nobuyuki**
**16-6-1. Naka**
**Kunitachi-city, Tokyo (JP)**

(74) Representative: **Brown, John David et al,**
**FORRESTER & BOEHMERT Widenmayerstrasse**
**4/I**
**D-8000 München 22 (DE)**

Courier Press, Leamington Spa, England.

## Solid fuel and a process for producing fuel.

The present invention relates to a solid fuel produced from a liquid fuel such as crude oil, gaosline, kerosene, light oil or heavy oil and a process for the production thereof.

Liquid fuels have the disadvantages that the greatest possible care should be taken in the transportation and storage thereof and handling of them is very troublesome, since there is always a danger that a fire or explosion could occur, even through they are very important as engine fuels by virtue of their merits that they need only be used in a small volume or weight because of their high calorific value, and the ignition, extinction and combustion control of them is easy and they have a high thermal efficiency. In view of the above, the development of a safe fuel convenient to handle and still having the merits of the liquid fuels has been desired.

U.S. Patent Specification No. 2,581,441 describes a method of solidfying a liquid hydrocarbon fuel which comprises mixing the fuel with sodium alginate and polysaccharides such as dextrine and sucrose and introducing the mixture into a tank of calcium chloride solution thereby obtaining a mass of solid pellets which burn less violently than the liquid hydrocarbon fuel. It is suggested that this effect arises because of the formation of insoluble calcium alginate in which small droplets of the liquid hydrocarbon are dispersed.

U.S. Patent Specification No. 3,314,884 discloses the stabilization of additives, for example combustion improvers, for lubricants and hydrocarbon fuels by forming inclusion compounds thereof with cyclodextrin.

An object of the present invention is to overcome or at least mitigate the defects of liquid fuels.

According to the first aspect of the present invention there is provided a solid fuel which comprises an originally liquid fuel and cyclodextrin or a cyclodextrin-containing decomposition product of starch, and a thermoformed solid fuel which comprises an originally liquid fuel, cyclodextrin or a cyclodextrin-containing decomposition product of starch, a combustible substance and a matrix material.

According to the second aspect of the present invention there is provided a process for producing a solid fuel, which process comprises mixing a liquid fuel with cyclodextrin or a cyclodextrin-containing decomposition product of starch to form an inclusion compound of the liquid fuel and cyclodextrin and a process for producing a solid fuel, which process comprises mixing a liquid fuel with cyclodextrin or a cyclodextrin-containing decomposition product of starch to form an inclusion compound of the liquid fuel and cyclodextrin, admixing therewith a combustible substance and a matrix material and thermoforming the admixture.

The present invention thus provides a relatively safe solid fuel convenient to handle which is produced from a liquid fuel which is dangerous and use of which can be dangerous and a process for the production of a relatively safe solid fuel comprising adding a combustible substance such as a pulp and a base material or matrix such as a wax to a mixture of a liquid fuel and cyclodextrin or a cyclodextrin-containing decomposition product of starch, and then thermoforming the resulting mixture.

As the liquid fuels used in the present invention, there may be mentioned petroleum fuels such as crude oil, gasoline, kerosene, light oil and heavy oil as well as alcohol fuels and fatty oils. Cyclodextrin is generally conveniently obtained by allowing Cyclodextrin glycosyltransferase produced by a microorganism of Bacillus and having an alkaline optimum pH to act on starch. The decomposition product of starch containing cyclodextrin is obtained as an intermediate product in this process. The decomposition product of starch is more inexpensive than cyclodextrin and, therefore, the former is economically more advantageous than the latter. Processes for the production of decomposition product of starch containing cyclodextrin have been disclosed in the specifications of Japanese Patents Nos. 886,583 (Publication No. 93/1977, published 5th January 1977) and 914,137 (Publication No. 43897/1977, published 2nd November 1977) and Japanese Patent Publication No. 31223/1978 (published 1st September 1978). However, the decomposition products are not limited to those produced by those processes but the products obtained by various other processes can be used. For example, a mixture of cyclodextrin-free decomposition product of starch and cyclodextrin can be used instead of the cyclodextrin-containing decomposition product of starch.

After investigations on the stabilization of the liquid fuels by converting them into inclusion compounds with cyclodextrin for the purpose of attaining said object, the inventors have found that safety of the liquid fuels can be improved remarkably by converting them into inclusion compounds with cyclodextrin.

The following Examples further illustrate the present invention.

### Example I.

700 grams of cyclodextrin-containing thick malt syrup (trade name: Seldex CH-20; a product of Nihon Shokuhin Kako K.K.: cyclodextrin content: 15 wt. %) were added to 300 g of illuminating kerosene. The mixture was stirred at room temperature for 3 hours and then there was added 300 g of groundwood pulp and 300 g of powdery paraffin wax and the whole was stirred thoroughly. The resulting mixture was allowed to stand for longer than 3 hours and then thermoformed into a solid fuel with a moulding machine at a temperature above 100°C. The word "Seldex" is a Trade Mark.

The resulting solid fuel has excellent igniting property and combustibility and was not denatured after storage for a long period of time.

Example II.

A solid fuel was obtained in the same manner as in Example I except that the cyclodextrin-containing decomposition product of starch was replaced with $\alpha$-cyclodextrin. The resulting solid fuel has properties not at all inferior to those of the solid fuel obtained in Example I.

Example III.

(1) (a) A liquid mixture of 100 g of methanol prepared from natural gas and 200 g of crude oil was prepared.

(b) 15 litres of 4 w/v% potato starch (starch content: 600 g) were adjusted to pH 10 with sodium hydroxide and then gelatinized at 125°C for 30 minutes to obtain a homogeneous paste. The paste was cooled to 50°C and then there was added 600 mg of enzyme produced by Bacillus No. 38-2 deposited on 24 June 1970 and accorded FRI Deposit No. 614 at the Fermentation Research Institute, Agency of Industrial Science (Biseibutsu Kogyo Gijutsu Kenkyu-Jo). The reaction was effected at 50°C for 30 hours.

After completion of the reaction, the reaction mixture was heated to 100°C for 5 minutes to deactivate the enzyme, cooled to 55°C and adjusted to pH 5.0 with hydrochloric acid. 900 milligrams of glucoamylase (trade name; GSA-1; a product of Amano Seiyaku K.K.; 2000 units/g) were added thereto and the reaction was continued for a further 20 hours. The cyclodextrin containing decomposition product of starch thus obtained was decolourized with activated carbon, filtered and concentrated to a solid content of 65% by weight, then there was added 500 mg of $\beta$-cyclodextrin and allowed to stand in a cool chamber overnight.

The resulting cyclodextrin precipitate was filtered out and dried under reduced pressure to obtain 280 g of $\beta$-cyclodextrin.

The above-described process has already been disclosed in the specification of Japanese Patent Publication No. 43897/1977 as a process for crystallizing cyclodextrin.

(2) The same treatment as in Example I was carried out except that the illuminating kerosene was replaced with the mixture of (1) (a) above and the cyclodextrin-containing thick malt syrup was replaced with $\beta$-cyclodextrin obtained in (1) (b) above to obtain a solid fuel.

(3) The same treatment as in Example I was carried out except that the illuminating kerosene was replaced with the mixture of (1) (a) above and the cyclodextrin-containing thick malt syrup was replaced with the filtrate (solid content; 30%) of (1) (b) from which the $\beta$-cyclodextrin precipitate has been filtered out to obtain a solid fuel.

The solid fuels obtained in (2) and (3) above had particularly excellent igniting property and combustibility and were not modified after storage for a long period of time. Particularly, production cost of the solid fuel was very low, since the filtrate usable for the production of cyclodextrin-containing thick malt syrup was used after the decolourization and concentration.

In the production of solid fuels in the above Examples, it is preferred to effect the moulding in such a manner that as large as possible pores are formed in the products for further improving combustibility of the moulded products.

The process of the present invention is also applicable to the safe storage of liquid fuel. In case the process of the present invention is utilized not for the production of solid fuels but for the safe storage of liquid fuel, the object can be attained merely by mixing a liquid fuel with cyclodextrin or a cyclodextrin-containing decomposition product of starch to form an inclusion compound of the liquid fuel. Thus, the liquid fuel can be stabilized and kept stable during storage over a long period of time. When the fuel is to be used, the inclusion compound is immersed in warm water to isolate the liquid fuel therefrom so that it can be used solely.

Thus, the present invention provides a safe solid fuel of excellent igniting property and combustibility which can be handled easily and stored for a long period of time prepared from a liquid fuel with an inherent danger of a fire or explosion which liquid fuel cannot be handled easily. The present invention can be utilized, therefore, not only for the production of solid fuel but also for the storage of liquid fuel stably. The invention is highly valuable also as a means of securing petroleum resources which now poses an important problem. The contribution and effects of the present invention are very remarkable.

**Claims**

1. A solid fuel which comprises an originally liquid fuel and cyclodextrin or a cyclodextrin-containing decomposition product of starch.

2. A thermoformed solid fuel which comprises an originally liquid fuel, cyclodextrin or a cyclodextrin-containing decomposition product of starch, a combustible substance and matrix material.

3. A solid fuel according to Claim 2, wherein the combustible substance is a pulp.

4. A solid fuel according to Claim 2 or 3, wherein the matrix material is a wax.

5. A process for producing a solid fuel, which process comprises mixing a liquid fuel with cyclodextrin or a cyclodextrin-containing decomposition product of starch to form an inclusion compound of the liquid fuel and cyclodextrin.

6. A process for producing a solid fuel, which process comprises mixing a liquid fuel with cyclodextrin or a cyclodextrin-containing decomposition product of starch to form an inclusion compound of the liquid fuel and cyclodextrin, admixing therewith a combustible substance and a matrix material and thermoforming the admixture.

7. A process according to Claim 6, wherein the combustible substance is a pulp.

8. A process according to Claim 6 or 7, wherein the matrix material is a wax.

**Revendications**

1. Combustible solide qui comprend un combustible initialement liquide et de la cyclodextrine ou un produit de décomposition de l'amidon contenant de la cyclodextrine.

2. Combustible solide thermoformé qui comprend un combustible initialement liquide, de la cyclodextrine ou un produit de décomposition de l'amidon contenant de la cyclodextrine, une substance combustible et une matière de matrice.

3. Combustible solide suivant la revendication 2, caractérisé en ce que la substance combustible est une pâte à papier.

4. Combustible solide suivant l'une quelconque des revendications 2 ou 3, caractérisé en ce que la matière de matrice est une cire.

5. Procédé de production d'un combustible solide, consistant à mélanger un combustible liquide avec de la cyclodextrine ou un produit de décomposition de l'amidon contenant de la cyclodextrine pour former un composé d'inclusions du combustible liquide et de la cyclodextrine.

6. Procédé de production d'un combustible solide, consistant à mélanger un combustible liquide avec de la cyclodextrine ou un produit de décomposition de l'amidon contenant de la cyclodextrine pour former un composé d'inclusions du combustible liquide et de la cyclodextrine, à mélanger avec ceux-ci une substance combustible et une matière de matrice et à thermoformer le mélange.

7. Procédé suivant la revendication 6, caractérisé en ce que la substance combustible est une pâte à papier.

8. Procédé suivant l'une quelconque des revendications 6 ou 7, caractérisé en ce que la matière de matrice est une cire.

**Patentansprüche**

1. Ein fester Brennstoff, des einen ursprünglich flüssigen Treibstoff und Cyclodextrin oder ein Cyclodextrin enthaltendes Abbauprodukt von Stärke aufweist.

2. Ein thermogeformter fester Triebstoff, der einen ursprünglich flüssigen Treibstoff, Cyclodextrin oder ein Cyclodextrin-haltiges Abbauprodukt von Stärke, eine brennbare Substanz und ein Matrixmaterial aufweist.

3. Ein fester Brennstoff gemäß Anspruch 2, worin die brennbare Substanz eine Pülpe ist.

4. Ein fester Brennstoff gemäß Anspruch 2 oder 3, worin das Matrixmaterial ein Wachs ist.

5. Verfahren zur Herstellung eines festen Brennstoffes, wobei das Verfahren das Mischen eines flüssigen Brennstoffes und Cyclodextrins oder einer Cyclodextrin-haltigen Abbauproduktes von Starke zur Bildung einer Einschlußverbindung von flüssigem Brennstoff und Cyclodextrin, aufweist.

6. Ein Verfahren zum Herstellen eines festen Brennstoffes, wobei das Verfahren Mischen eines flüssigen Brennstoffes und Cyclodextrins oder eines Cyclodextrin-haltigen Abbauproduktes von Stärke zur Bildung einer Einschlußverbindung des flüssigen Brennstoffes und Cyclodextrins, Zumischen einer brennbaren Substanz und eines Matrixmaterials zu diesem, und Thermoformen des Gemischs.

7. Ein Verfahren gemäß Anspruch 6, wobei die brennbare Substanz eine Pülpe ist.

8. Verfahren gemäß Anspruch 6 oder 7, wobei das Matrixmaterial ein Wachs ist.